Europäisches Patentamt

European Patent Office

Office européen des brevets

(19)

(11) Publication number: **0 172 745**
**B1**

## EUROPEAN PATENT SPECIFICATION

(45) Date of publication of patent specification: **14.06.89**

(51) Int. Cl.⁴: **B 65 G 17/08**

(21) Application number: **85305874.1**

(22) Date of filing: **19.08.85**

(54) Conveyor belt having a high friction conveying surface.

(30) Priority: **20.08.84 US 642533**

(43) Date of publication of application:
**26.02.86 Bulletin 86/09**

(45) Publication of the grant of the patent:
**14.06.89 Bulletin 89/24**

(84) Designated Contracting States:
**DE FR GB IT**

(56) References cited:
**AT-B- 326 038**
**US-A-4 213 527**

(73) Proprietor: **The Laitram Corporation**
**220 Laitram Lane**
**Harahan Louisiana 70123 (US)**

(72) Inventor: **Lapeyre, James M.**
**13 Richmond Place**
**New Orleans Louisiana 70115 (US)**

(74) Representative: **Arthur, John William et al**
**FITZPATRICKS 4 West Regent Street**
**Glasgow G2 1RS Scotland (GB)**

Courier Press, Leamington Spa, England.

## Description

This invention relates to conveyor belts.

US-A-4 213 527 discloses a pivotally joined conveyor belt, comprising a plurality of modules of identical pitch dimensions adapted to be pivotally connected end-to-end and side-by-side, said modules comprising a base member integrally moulded from plastic material, having first and second pivoted ends pivotally joined with other modules, defining an attaching area on the top side of said base member, and including means for receiving a driving force. In US-A-4 213 527 a frictional member is formed integrally with said base member at said attaching area. Thus, the conveyor belt is limited in application. Furthermore, in US-A-4 213 527, said means for receiving a driving force is in the form of a tooth for cooperation with recesses in a sprocket forming part of a driving mechanism with a large number of moving parts.

An object of the invention is to provide a conveyor belt which can be readily adapted to be used to convey items of various shapes and sizes and which can be used with a driving arrangement having few moving parts.

In order to achieve the above object the invention is characterised by frictional members of a selected shape having an attaching bottom portion for removably attaching to said attaching area of said base members, said frictional members having a shape for providing a conveying surface of a selected configuration on said top side of said base member, and in that said means for receiving a driving force includes a conductive material secured to selected elongate elements located at the outside edge of selected ones of said plurality of modules, and a plurality of electrical coils positioned to electrically interact with said conductive material of said selected elongate elements such that said selected elongate elements and said electrical coils operate as an armature and drive coils respectively of a linear motor so that sequentially energising said electrical coils generates a moving field which interacts with said conductive material to provide said driving force.

A preferred form of the conveyor belt which lends itself to ready adaptation is further characterised in that said attaching area is a recess defined in said top side of said base member, and an overhang defined by said top side, which overhang extends over said recess, and in that said attaching portion of said frictional member is shaped and formed for being received in said recess and retained by said overhang.

Embodiments of the invention will be described by way of example only with reference to the accompanying drawings in which:

Fig. 1 shows a conveyor belt which includes modules of this invention carrying bulky packages up an inclined plane.

Fig. 2 shows a section of the conveyor belt of Fig. 1 and further illustrates a plurality of the modules making up the belt of Fig. 1 being pivotally connected.

Fig. 3 is a perspective view of a single module of Fig. 2 wherein the first plurality of pivot ends are laterally offset from the second plurality of pivot ends.

Fig. 3A shows a break-away view of a single elongated element making up the base member of Fig. 3.

Figs. 4A and 4B are side views of the module and frictional member respectively of Fig. 3.

Figs. 4C, 4D and 4E are side views of frictional members similar to the frictional member of Fig. 4B, except they have different cross-sections.

Figs. 5A and 5B are top views of the module and frictional member respectively of Fig. 3.

Fig. 6 illustrates a side view of the belt of Fig. 1 formed of modules of Figs. 3, 4A and 4B as the belt travels around a sprocket.

Fig. 7 discloses a belt similar to that of Fig. 4 except that there is shown a toothed sprocket wheel moving into recesses in individual modules.

Fig. 8 illustrates a side view of still another type of module wherein there is shown a toothed sprocket wheel engaging the link ends of each module.

Fig. 9 shows a top view of the module of Fig. 7 having the first plurality of pivot ends in line with the second plurality of pivot ends, and including recesses for receiving the projections of a toothed sprocket wheel.

Fig. 10 shows a top view of a module similar to the module of Fig. 9, except the first plurality of ends are laterally offset from the second plurality of pivot ends.

Fig. 11 shows one embodiment of a side view and bottom view of a module having a top view similar to that of Fig. 10.

Fig. 12 shows both a side and bottom view of still another alternative embodiment having a top view similar to that of Fig. 10.

Fig. 13 shows still another to and bottom view of another alternative embodiment having a top similar to that of Fig. 10.

Fig. 14 shows a conveyor belt section having a conductive material embedded in the outside modules of a belt which serve as the armature of a linear motor having electrical coils which serve as a stator for interacting with and moving said armature.

Figs. 15 and 16 respectively show a side and end view of the belt of Fig. 14 with the stator coils in place.

Fig. 17 illustrates a conveying link module similar to Fig. 1, except two conveying flight members are attached to each module.

Figs. 18A and 18B show other alternative methods of attaching the resilient frictional member to the top portion of the module.

Figs. 19A and 19B show yet another method of attaching the resilient frictional member to the module.

Figs. 20A and 20B show top and side views respectively of the use of a multiplicity of smaller resilient inserts attached to each of the modules.

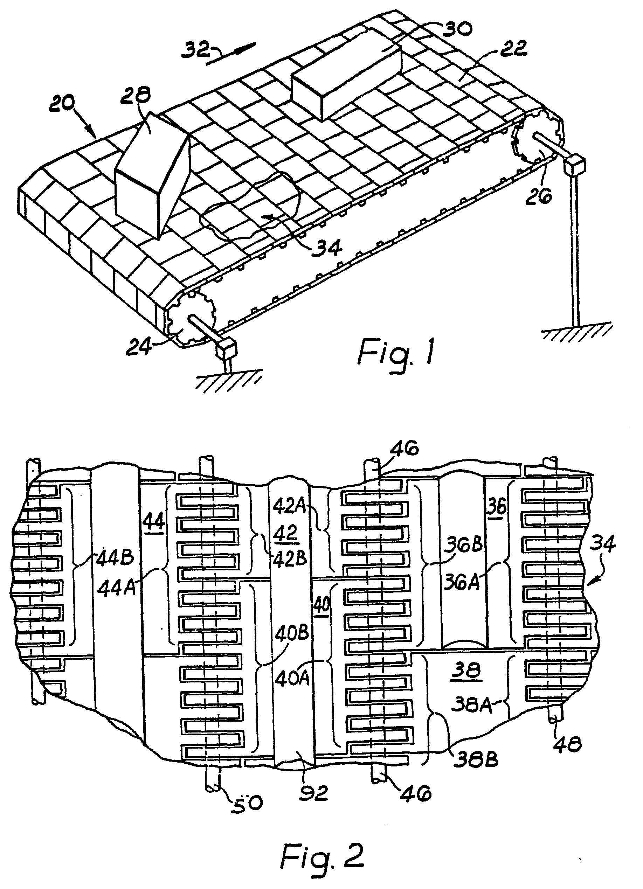

Referring now to Fig. 1, there is shown generally at 20 an endless loop conveyor belt 22 having a lower sprocket 24 and an upper sprocket 26. Further, as can be seen, belt 22 is moving bulky packages 28 and 30 up an inclined plane as indicated by an arrow 32.

As shown in Fig. 2, which is a blown up portion of a section 34 of the conveyor belt of Fig. 1, belt 22 is formed of a multiplicity of identical modules, such a modules 36, 38, 40, 42 and 44 each of which has a first plurality of pivot ends 36A, 38A, 40A, 42A and 44A, and a second plurality of pivot ends 36B, 38B, 40B, 42B and 44B respectively. As can also be seen, modules 36 and 38 are arranged side-by-side such that the apertures defined in each of the plurality of pivot ends 36B and 38B are arranged coaxially. In a similar manner the modules 40 and 42 are also arranged side-by-side such that the pivot holes defined in the plurality of link ends 40A and 42A are also coaxial. The plurality of pivot ends 36B and 38B of their respective modules 36 and 38 are then intermeshed with the plurality of pivot ends 40A and 42A of modules 40 and 42 such that all of the pivot holes of the intermeshed link ends are coaxial and the modules are all pivotally connected by a single pivot rod 46. Thus it can be seen that the inclined conveyor belt of Fig. 1 is therefore formed of a large plurality of such modules arranged side-by-side and end-to-end and joined by a multiplicity of pivot rods such as 46, 48 and 50 so that the conveyor belt may be formed as an endless loop around sprockets 24 and 26.

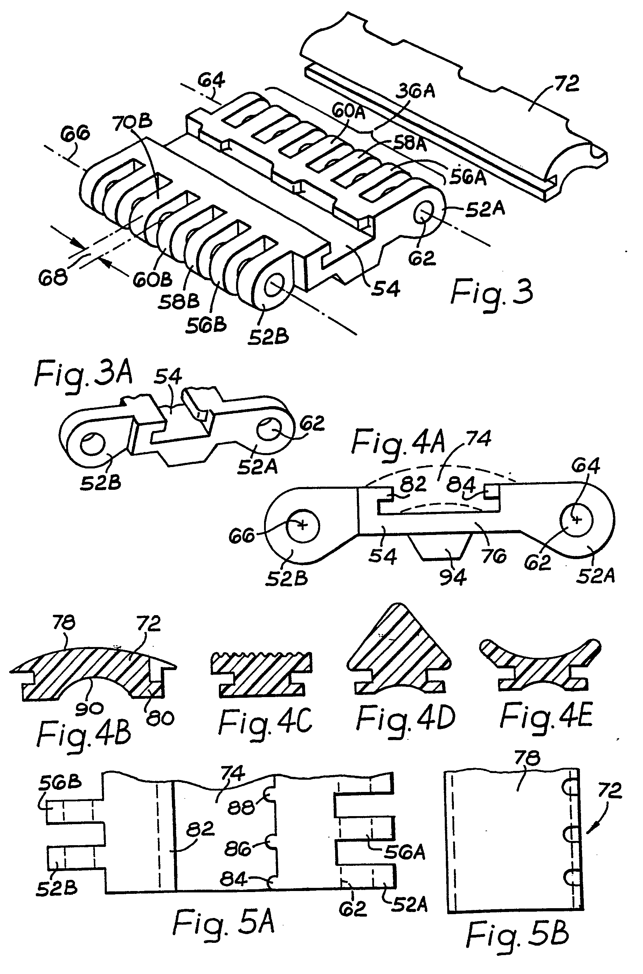

Referring now to Fig. 3, there is shown a perspective view of one of the modules, such as module 36 making up the section of belt shown in Fig. 2, and the full conveyor belt shown in Fig. 1. As will be appreciated by those skilled in the art, such modules are preferably formed by injection moulding of inherently slick or low friction material such as polypropylene, polyethylene, acetal and the like. As can be seen more clearly in the broken-out view of Fig. 3A, module 36 is formed of a plurality of elongated elements each of which has a first pivot end 52A and a second pivot end 52B joined by an intermediate section 54. In a similar manner, the plurality of pivot ends 36A of the module 36 is comprised of a plurality of parallel members such as shown at 52A, 56A, 58A and 60A, each of which member defines an aperture such as aperture 62 in link end 52A. And as can also be more clearly seen in this figure of a single link module, the pivot axis of the apertures such as aperture 62 defined in each of the parallel pivot ends of the pluralities of pivot ends 36A are all aligned coaxially along a pivot axis indicated by pivot line 64. In a similar manner, all of the pivot holes defined in the plurality of pivot ends 36B are aligned coaxially along a second pivot axis 66. Pivot apertures do not necessarily have to be circular in cross-section but may be another suitable shape as required to permit cleaning, etc. However, a circular shape is shown in Figs. 3 and 3A because circular shapes are the most easily manufactured. Pivot axes 64 and 66, as will be appreciated by those skilled in the art are parallel to each other and thereby define a common first plane.

As can also be clearly seen by Figs. 3 and 3A, each of the plurality of link ends 36A and 36B respectively are joined by and formed integral with an intermediate section 54. Intermediate section 54, as can be seen, maintains each of the individual pivot ends of the plurality of pivot ends of 36A and 36B parallel to each other and at a selected spaced distance from each other. It will also be appreciated that since each of the pluralities of pivot ends must intermesh with the plurality of the pivot ends of another module, the individual pivot ends such as pivot ends 52A, 56A, 58A and 60A have a thickness which is less than the spacing between adjacent pivot ends such as the space indicated by arrow 68 between pivot end 70B and pivot end 60B.

Further, although different types of pivot ends and intermediate sections may be used in forming modules incorporating the teaching of this invention (as will be discussed in detail hereinafter), in a preferred embodiment, such as shown in Figs. 3 and 3A, the first plurality of pivot ends 36A are laterally offset from the second plurality of link ends 36B such that each of the pivot ends of the first plurality 36A are in register with the spaces between the link ends of the second plurality of 36B and vice-versa. Offsetting the plurality of pivot ends 36A laterally from the pivot ends 36B as illustrated in Fig. 3 and 3A, allows the modules to be arranged end to end and still provide a substantially continuous outside edge. Referring now to Fig. 3, and Figs. 4A and 4B which are side views of the module of Fig. 3 and Figs. 5A and 5B which are top views of the module of Fig. 3, it can be seen that the frictional member 72 which is made out of a resilient material such as rubber, plastics, leather or the like, is formed for locating within a recess 74 of the module 76 and includes a top surface 78 which protrudes above the top plane of the module 76 thereby providing a conveying surface which exhibits increased friction characteristics. As shown, the frictional member 72 includes a bottom portion or an attaching portion 80 which conforms to the recess 74 in module 36 and which is restrained within the recess 74 by means of an overhang such as ledge 82 shown on the left side of Figs. 4A and 5A, or tabs 84, 86 and 88 which extend over the recess thereby maintaining resilient member 72 in position. As can best be seen in Fig. 4B, resilient frictional member 72 may also include a hollow or scalloped out area 90 which allows the member 72 to be deformed sufficiently to be inserted in the recess 74 and under the restraining ledge 82, and tabs 84, 86 and 88. This of course allows for easy insertion of the member. It will, of course, be appreciated that the resilient frictional member 72 may be of a length substantially the same as that of the width of the module 36 such that a resilient member may be inserted in each module making up a belt such as shown in Fig. 3.

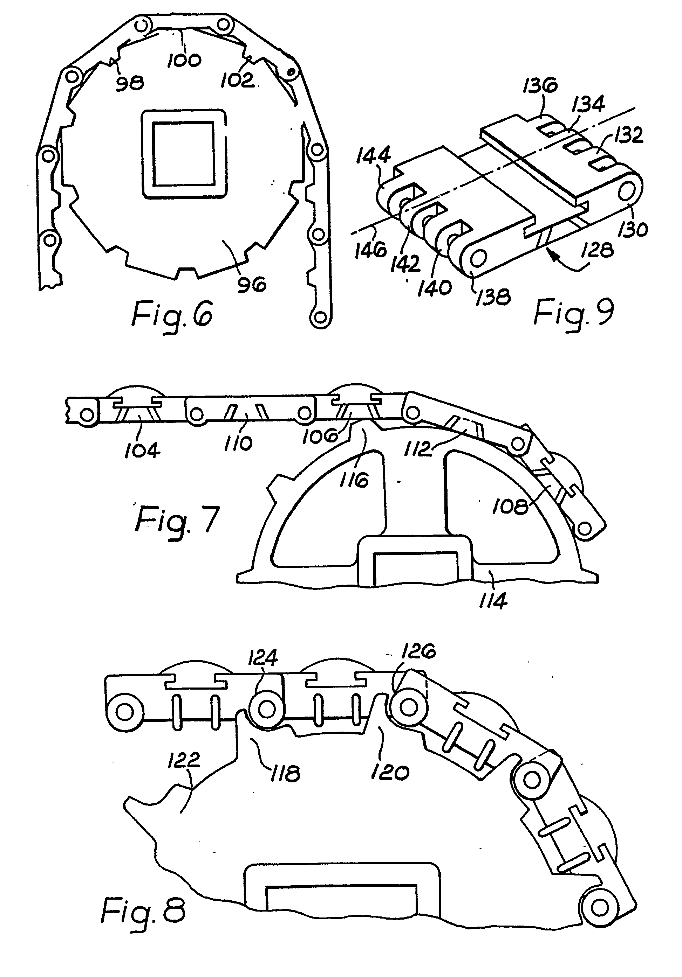

Alternatively, and as shown in Fig. 2, a single resilient member 92 may have a length equal to a plurality of the widths of modules such as modules 40 and 42, and extend across two or more such modules as shown when the modules as shown when the modules are arranged in a side-by-side relation. To fabricate such a belt, it will be appreciated of course that the side-by-side link modules should first be pivotally connected and then the resilient member 72 inserted in to the recess 74. It will further be appreciated that although the conveyor belt as illustrated in Figs. 1 and 2 was fabricated wholly out of the high friction conveying surface modules of this invention, it should be understood that as shown in Fig. 7, a satisfactory high friction belt may be fabricated partially of the high friction conveying surface modules of this invention, such as modules 104, 106 and 108, and partially of similar constructed modules, but which do not include the resilient high friction frictional member such as modules 110 and 112.

In the embodiment of Fig. 4A, there is also shown a tooth member 94 extending from the intermediate section 54 at a substantially equal distance from the two pivot axes 64 and 66. As can be seen in Fig. 6, a sprocket wheel 96 has cooperating recesses 98, 100 and 102 which receive a tooth similar to tooth 94 of Fig. 4A, and similar teeth on other modules, such that the modules are guided in a direction which is orthogonal to the axes 64 and 66 and which at the same time is substantially parallel to the plane defined by the axes 64 and 66. It will, of course, be appreciated that as shown in Figs. 4C, 4D and 4E, the cross-section of the frictional member may have any suitable shape for providing a non-slip surface.

It will be appreciated of course that as discussed in the background of this application there are now various types of modular link belts being manufactured. Therefore, there is shown in Fig. 7 a side view of another type of module which incorporates the frictional member of this invention, but which is guided in a different manner. As shown, rather than using a tooth on each module each module instead defines a recess such as recesses 104, 106, 108, 110 and 112 suitable for receiving a tooth protruding from the circumference of a sprocket wheel 114. For example, recess 106 is shown as receiving tooth 116.

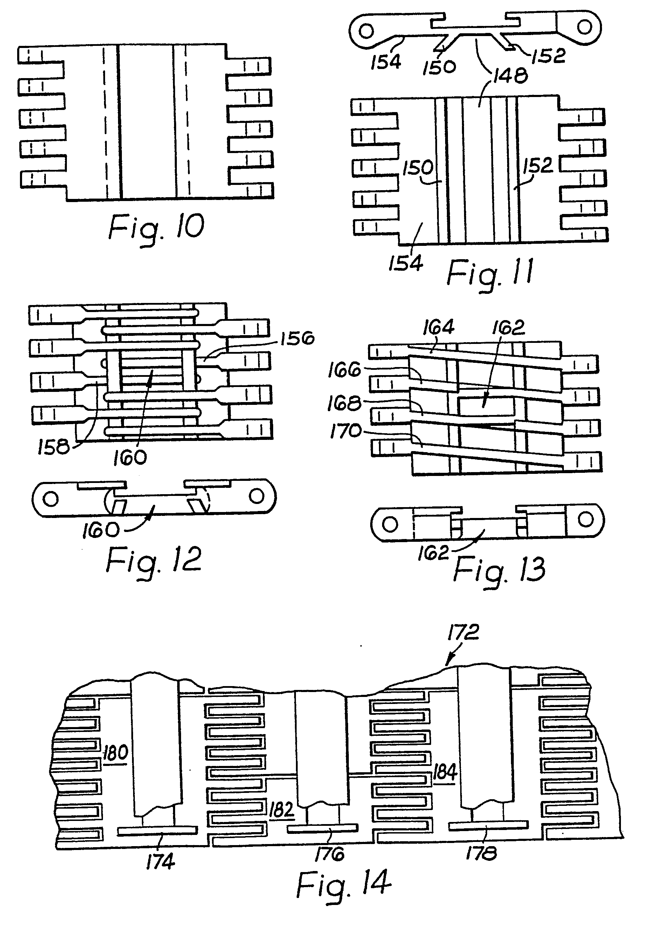

In a similar manner, Fig. 8 shows still another type module of a link belt wherein contoured teeth 118 and 120 extending from the circumference of another sprocket 122 engage and contact surfaces 124 and 126 on the link or pivot end rather than at an intermediate recess. Thus, it will be appreciated that the teachings of this invention may be incorporated with link belts which may be different in appearance. As an example, Fig. 9 illustrates a single module 128 comprised of member 130, 132, 134 and 136 and which is of the type shown in Fig. 7 without the resilient frictional member being inserted. In this module 128, it can be seen that the first plurality of pivot ends on one side of the module are in line with pivot ends 138, 140, 142 and 144 on the other side as is illustrated by straight line 146 which extends through pivot ends 134 and 142. This in line arrangement would also apply to modules of a belt similar to that shown in Fig. 8. As a further example, Fig. 10 shows a top view of a module wherein the pivot ends are laterally offset. Several types of module construction may present a top view similar to that shown in Fig. 10. As can be seen from the bottom and side view of Fig. 11, a sprocket tooth of a sprocket wheel engages a pocket 148 formed by orthogonally extending angled members 150 and 152 protruding from the underside portion 154 of the module rather than a recess actually formed in the module. Likewise, as shown in the side and bottom views of Fig. 12, the plurality of alternating elongated members such as members 156 and 158 may include partially void areas such as 160 which form the recess for receiving the tooth of a sprocket. In a similar manner, the side and bottom views of Fig. 13 show how a recess 162 may be formed even though the elongated members include angled members 164, 166, 168 and 170 to achieve the lateral offset of the two pluralities of pivot ends.

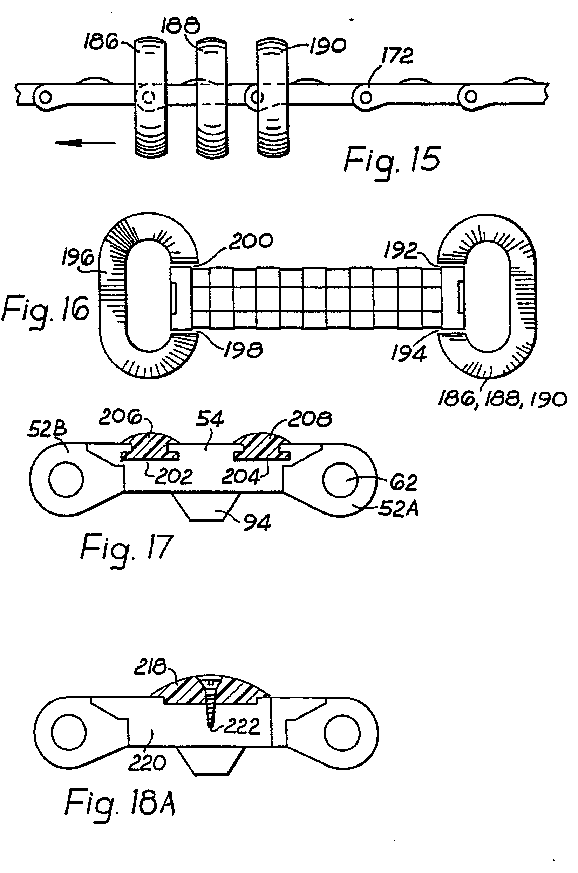

The belt 172 is driven as follows. According to Figs. 14, 15 and 16, an electric conductive material 174, 176 and 178 is secured to selected modules such as modules 180, 182 and 184 located at the outside edge of belt 172 which is comprised of a plurality of otherwise similar modules. Although the conductive material may be secured by any means to the selected modules, it will be appreciated that in a preferred operation the conductive material may preferably be embedded in the end portions of the selected modules which will ultimately form the edges of the assembled belt during the injection moulding process. A plurality of these modules having the conductive material embedded therein are then arranged end-to-end on both edges of the belt such that they are in alignment with each other. Further, as is shown in Figs. 15 and 16. one or more C-shaped coils 186, 188 and 190 are arranged such that the opening 192 of the C-shaped coil passes over the aligned magnetic members on side 194 of belt 172. In a similar manner, another series of C-shaped coils (such as coil 196) are arranged so that the conductive materials on side 198 pass between the C-shaped openings 200 of their respective coils. Thus in this matter, the conductive members in the belt act as the armature of a linear motor and electrically interact with the coils which are sequentially electrically activated to drive the belt in a direction orthogonal to the pivot axis and substantially parallel to the plane defined by the pivot axis.

As discussed heretofore, a single frictional member having a top conveying surface has been combined with a module to form a conveyor belt having a non-slipping surface. However, as shown in Fig. 17, a typical module similar to that discussed with respect of Fig. 4A may instead define a pair of recesses 202 and 204 each of which receives a resilient member 206 and 208 respectively which are similar to the resilient members discussed above. It will also be appreciated of course that more additional recesses could be included and three or more resilient members inserted in such recesses.

Further although to this point the resilient conveying members have been described as being secured to each individual module by being inserted in recesses and retained by overhangs such as ledges or tabs, it will be appreciated of course that other methods of removably attaching the resilient member may be used. For example, and as shown in Fig. 18A resilient member 218 may be attached to module 220 by a screw member 222.

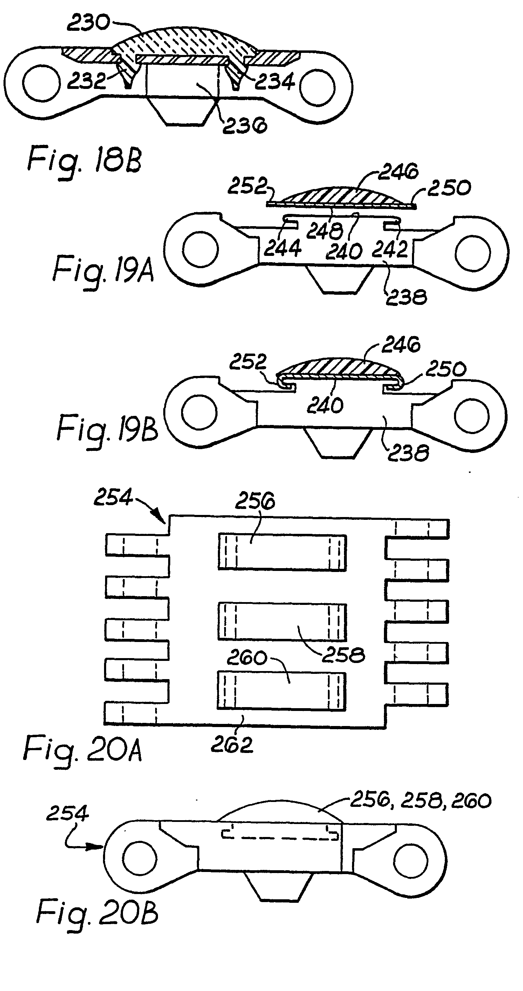

A still further method of attaching as shown in Fig. 18B, would be to simply mould integrally with the frictional member 230 elastic fastening snaps 232 and 234, which could be inserted through properly aligned holes in the module 236. These elastic snaps would obviate the need for any undercuts in the plastic module and for separate fastening devices such as screws, rivets and adhesives. As an alternative method to the previously described methods of attaching (wherein a recess was typically used) Figs. 19A and 19B show yet another method of attaching the resilient frictional member to the module. As shown in these figures, the conveying module 238 defines a top surface 240 which includes protrusions 242 and 244. The resilient frictional member 246 is permanently and securely bonded to a deformable member 248, such as for example a strip of soft iron. The combination soft iron member 248 and resilient frictional member 246 is then attached to the top surface 240 by crimping the edges 250 and 252 of the soft metal strip 248 around protrusions 242 and 244. Thus, it will be appreciated that the teachings of this invention are intended to include all methods of attaching one or more resilient conveying members to a module, and it should be appreciated that the techniques discussed herein are examples only.

Further, as shown in Figs. 20A and 20B instead of one or more resilient frictional members which run parallel to the pivot axis being included with a single module, a module such as module 254 may include a plurality of smaller resilient members such as conveying members 256, 258 and 260 which run perpendicular to the pivot axis. It will be appreciated of course that these resilient members 256, 258 and 260 may be attached to the top surface 262 of module 254 by any of the techniques discussed heretofore or any other suitable technique.

Thus, although there has been described to this point particular embodiments of modules for forming conveyor belts having a high friction frictional surface, it is not intended that such specific references be considered as limitations upon the scope of this invention except insofar as set forth in the following claims.

## Claims

1. A pivotally joined conveyor belt (20), comprising a plurality of modules (36) of identical pitch dimensions adapted to be pivotally connected end-to-end and side-by-side, said modules (36) comprising a base member integrally moulded from plastic material, having first and second pivoted ends (36A, 36B) pivotally joined with other modules (42), defining an attaching area (74) on the top side of said base member and including means (174) for receiving a driving force, characterised by frictional members (72) of a selected shape having an attaching bottom portion (80) for removably attaching to said attaching area (74) of said base members, said frictional members (72) having a shape for providing a conveying surface of a selected configuration on said top side of said base member, and in that said means for receiving a driving force includes a conductive material (174) secured to selected elongate elements located at the outside edge of selected ones of said plurality of modules (36), and a plurality of electrical coils (186) positioned to electrically interact with said conductive material (174) of said selected elongate elements such that said selected elongate elements and said electrical coils (186) operate as an armature and drive coils respectively of a linear motor so that sequentially energising said electrical coils (186) generates a moving field which interacts with said conductive material (174) to provide said driving force.

2. A pivotally joined conveyor belt (20) according to claim 1, further characterised in that said attaching area is a recess (74) defined in said to side of said base member and an overhang (82) defined by said top side, which overhang extends over said recess (74), and in that said attaching portion (80) of said frictional member (72) is shaped and formed for being received in said recess (74) and retained by said overhang (82).

## Patentansprüche

1. Förderband (20) aus gelenkig miteinander verbundenen Gliedern (36), die in ihren die Teilung des Förderbandes bestimmenden Maßen übereinstimmen, so ausgebildet sind, dass sie gelenkig Ende an Ende sowie Seite an Seite miteinander verbunden werden können, und aus einem in einem Stück aus Kunststoff geformten Basisteil bestehen, welches ein erstes und ein zweites Ende (36A, 36B) hat, an denen sie gelenkig mit weiteren Gliedern (42) verbunden sind, wobei auf der Oberseite des Basisteils ein Befestigungsbereich (74) ausgebildet ist,

und mit Mitteln (174) zur Aufnahme einer Antriebskraft, gekennzeichnet durch Reibungselemente (72) von ausgewählter Gestalt mit einem Fußteil (80) zur lösbaren Befestigung an den Basisteilen in deren Befestigungsbereich (74), welche (72) so ausgebildet sind, dass sie auf der Oberseite des Basisteils eine fördernde Oberfläche von ausgewählter Gestalt bilden,

und dass die Mittel zur Aufnahme einer Antriebskraft einen leitenden Werkstoff (174), welcher an ausgewählten, länglichen Elementen angebracht ist, die sich am äußeren Rand von aus der Menge der Glieder (36) ausgewählten Gliedern befinden, sowie eine Anzahl elektrische Spulen (186) enthalten, welche so angeordnet sind, dass sie mit dem elektrischen Werkstoff (174) an den ausgewählten elektrischen Elementen in der Weise elektrisch wechselwirken, dass die ausgewählten, länglichen Elemente und die elektrischen Spulen (186) als Läufer bzw. Treiberspulen eines Linearmotors wirken, so dass eine aufeinanderfolgende Erregung der elektrischen Spulen (186) ein wanderndes Feld erzeugt, welches zur Erzeugung der Antriebskraft mit dem leitenden Werkstoff (174) in Wechselwirkung tritt.

2. Förderband nach Anspruch 1, dadurch gekennzeichnet, dass der Befestigungsbereich als eine in der Oberseite des Basisteils vorgesehene Ausnehmung (74) ausgebildet ist, dass durch die Oberseite ein Überstand (82) gebildet ist, welcher über die Ausnehmung (74) auskragt, und dass das zur Befestigung dienende Fußteil (80) des Reibungselementes (39) so ausgestaltet und geformt ist, dass es in die Ausnehmung (74) paßt und darin durch den Überstand (82) festgehalten wird.

**Revendications**

1. Bande transporteuse (20) à jonctions pivotantes, comprenant une pluralité de modules (36) avec des dimensions de pas identiques, adaptés à être raccordés en pivotement bout-à-bout et côte-à-côte, lesdits modules (36) comprenant un élément de base moulé intégralement en matière plastique, comprenant des première et seconde extrémités (36A, 36B) raccordées en pivotement à d'autres modules (42), définissant une zone de fixation (74) sur la face supérieure dudit élément de base, et comprenant des moyens (174) pour recevoir une force d'entrainement, caractérisé par des éléments de friction (72) de forme sélectionnée, ayant une partie de fond de fixation (80) pour être fixée de façon amovible à ladite zone de fixation (74) desdits éléments de base, lesdits éléments de friction (72) avant une forme permettant d'obtenir une surface de transport ayant une configuration sélectionnée sur ladite face supérieure dudit élément de base, et en ce que ledit moyen pour recevoir une force d'entrainement comprend un matériau conducteur (174) fixé à des éléments allongés sélectionnés, disposés sur le bord extérieur de modules sélectionnés parmi ladite pluralité de modules (36), et une pluralité d'enroulement électriques (186) positionnés pour une coopération électrique avec ledit matériau conducteur (174) desdits éléments allongés sélectionnés, de façon que lesdits éléments allongées sélectionnés et lesdits enroulements électriques (186) fonctionnent comme un rotor et conduisent les enroulements respectifs d'un moteur linéaire de façon que l'énergisation séquentielle desdits enroulements électriques (186) produise un champ mobile qui coopère ave ledit matériau conducteur (174) pour produire ladite force d'entrainement.

2. Bande transporteuse (20) à jonctions pivotants selon la revendication 1, caractérisée en outre en ce que ladite zone de fixation est une cavité (74) définie dans la face supérieure dudit élément de base, et un surplomb (82) défini par ladite face supérieure, qui s'étend par-dessus ladite cavité (74), et en ce que ladite partie de fixation (80) dudit élément de friction (72) est formée et structurée de manière à être reçue dans ladite cavité (74) et retenue par ledit surplomb (82).

Fig. 1

Fig. 2

Fig. 3

Fig. 3A

Fig. 4A

Fig. 4B

Fig. 4C

Fig. 4D

Fig. 4E

Fig. 5A

Fig. 5B

2

Fig. 6

Fig. 9

Fig. 7

Fig. 8

Fig. 10

Fig. 11

Fig. 12

Fig. 13

Fig. 14

Fig. 15

Fig. 16

186, 188, 190

Fig. 17

Fig. 18A

230

232    234

236

Fig. 18B

252    246    250

244    248    240    242

238

Fig. 19A

252    246    250

240

238

Fig. 19B

254    256

258

260

262

Fig. 20A

254    256, 258, 260

Fig. 20B